Europäisches Patentamt

European Patent Office

Office européen des brevets

(11) Numéro de publication: **0 245 184**
**A1**

# DEMANDE DE BREVET EUROPEEN

(21) Numéro de dépôt: **87420115.5**

(22) Date de dépôt: **28.04.87**

(51) Int. Cl.4: **F 24 D 19/10**

(30) Priorité: **29.04.86 FR 8606416**

(43) Date de publication de la demande:
**11.11.87 Bulletin 87/46**

(84) Etats contractants désignés:
**BE CH DE FR GB IT LI SE**

(71) Demandeur: **SOCIETE FINANCIERE ET COMMERCIALE
DU CHABLAIS Société à responsabilité limitée
13 avenue de la Fontaine Couverte
F-74200 Thonon-les-Bains (FR)**

(72) Inventeur: **Loquineau, Jacques
2 avenue Saint François de Sales
F-74200 Thonon Les Bains (FR)**

(74) Mandataire: **Laurent, Michel et al
Cabinet Michel Laurent 20 rue Louis Chirpaz B.P. 32
F-69131 Ecully Cédex (FR)**

(54) Procédé et installation de chauffage central bi-énergie.

(57) Procédé de chauffage central bi-énergie, avec une installation comprenant :
. une première chaudière (4) basse température avec un brûleur (5) ;
. une deuxième chaudière électrique (1) ;
. un thermostat d'ambiance (15) à deux étages (16, 17) disposé dans le local à chauffer ;
. une armoire de commande électrique (18),
caractérisé :
- en ce que le premier étage (16) du thermostat (15) à deux étages pilote le fonctionnement de la chaudière deuxième énergie basse température (4) lorsque l'on est sur tarification élevée de l'électricité et le fonctionnement de la chaudière électrique (1) lorsqu'on est sur tarification électrique favorable ;
- en ce que le deuxième étage (17) du même thermostat (15) pilote la mise en fonctionnement du brûleur (5) de la chaudière deuxième énergie (4) lorsqu'on est sur tarification favorable de l'électricité ;
- et enfin en ce que la température affichée au deuxième étage (17) de ce thermostat (15) est inférieure à celle affichée au premier étage (16).

FIG.1

**Description**

PROCEDE ET INSTALLATION DE CHAUFFAGE CENTRAL BI-ENERGIE

L'invention concerne un procédé de chauffage central bi-énergie. Elle se rapporte également à une installation pour la mise en oeuvre de ce procédé.

Pour le chauffage central, on a déjà proposé de coupler des chaudières électriques avec des chaudières traditionnelles, notamment à combustible liquide ou gazeux. C'est ce que l'on appelle le chauffage central bi-énergie. La chaudière électrique est utilisée pendant les périodes à tarification de l'électricité favorable, la chaudière deuxième énergie pendant les périodes à tarification de l'électricité élevée.

Dans le brevet français 82 18 723 du Demandeur correspondant à la demande européenne EP-A-0108699, on a décrit une solution du type en question dans laquelle le pilotage du fonctionnement simultané des deux chaudières, pendant la période à tarification favorable de l'électricité, se fait à partir d'une détection de la chute de température dans l'eau du circuit de chauffage central au départ de la chaudière électrique. Cette solution est parfaitement adaptée au chauffage central bi-énergie faisant appel à une chaudière électrique et une chaudière deuxième énergie disposées en séries, maintenues en température pendant toute la période de chauffage. Ce maintien en température se fait par le biais d'une vanne mélangeuse à trois ou quatre voies associées à un circulateur. Cette vanne mélangeuse permet ainsi d'assurer une température de l'eau du circuit de chauffage central au retour de la chaudière deuxième énergie, de sorte qu'il n'y a pas de condensation dans le foyer lors de chaque mise en route du brûleur de la chaudière deuxième énergie. Le circulateur assure la circulation de l'eau dans le circuit de chauffage central mais il est arrêté lorsque la température dans les locaux à chauffer au droit du thermostat d'ambiance est supérieur à celle affichée au point de consigne.

Cette solution ne permet pas toutefois de donner à l'utilisateur la possibilité de régler facilement les conditions de mise en service de la chaudière deuxième énergie, notamment par le biais d'un moyen auquel il aurait facilement accès.

On connait par ailleurs depuis quelques années des chaudières à combustible liquide ou gazeux dites "chaudières à basse température", ou "très basse température" ou "à condensation" -l'ensemble étant englobé ci-après sous l'expression "chaudière deuxième énergie basse température" ou "chaudière basse température"- qu'il n'est plus nécessaire de maintenir en température lorsque leur brûleur est arrêté. De telles chaudières basse température présentent l'avantage de ne plus nécessiter obligatoirement l'installation d'une vanne mélangeuse sur le circuit de chauffage central. La fonte et les joints utilisés pour leur réalisation résistent à la corrosion des condensats produits à chaque démarrage du brûleur. Certains modèles sont réalisés en acier inoxydable. Généralement ces chaudières sont équipées d'une chambre de combustion "sèche" en acier inoxydable réfractaire qui permet d'obtenir, lorsque le brûleur se met en fonctionnement alors que le foyer est froid, une excellente qualité de combustion sans encrassement du foyer.

On aurait pu penser à utiliser de telles chaudières "basse température" en chauffage bi-énergie. Mais malheureusement lorsqu'elles sont installées sans vanne mélangeuse comme elles le permettent, il n'aurait pas été possible de piloter le fonctionnement simultané par une "température seuil" détectée sur l'eau du circuit de chauffage central au départ de la chaudière électrique, car dans de telles installations, cette température au départ de la chaudière électrique varie dans une plage pouvant aller de la température ambiante (cas de la chaudière électrique et du circulateur à l'arrêt) à la température maximum de fonctionnement de la chaudière électrique.

L'invention pallie ces inconvénients. Elle vise un procédé et une installation qui permettent de coupler en chauffage central bi-énergie une chaudière électrique avec une chaudière deuxième énergie "basse température" mais qui soient économiques, faciles à piloter, sans condensation dans la cheminée et qui permettent en fonctionnant au maximum sur l'électricité,d'éviter le plus possible l'utilisation de la chaudière deuxième énergie "basse température".

Ce procédé de chauffage central bi-énergie, du type dans lequel on utilise deux chaudières disposées en série et reliées sans vanne mélangeuse au circuit de chauffage central :

. une première chaudière électrique dont la puissance ne permet pas de couvrir la totalité des besoins thermiques pendant la période à tarification de l'électricité favorable,

. une seconde chaudière "basse température" à combustible liquide ou gazeux, fonctionnant avec un brûleur, dite "chaudière deuxième énergie basse température" ou "chaudière deuxième énergie". La puissance de cette chaudière permet de couvrir les besoins thermiques les plus élevés auxquels l'installation de chauffage central doit faire face pendant les jours les plus froids.

. un thermostat d'ambiance à deux étages disposés dans le local à chauffer, réglable par l'utilisateur,

. une armoire de commande électrique pour piloter la mise en marche ou l'arrêt desdites chaudières,

se caractérise en ce que, pendant la période à tarification de l'électricité favorable, on enclenche la chaudière deuxième énergie basse température, simultanément à la chaudière électrique :

- tout d'abord, lorsque la température T dans le local à chauffer, détectée par le thermostat d'ambiance à deux étages, devient au plus égale à la température de fermeture du deuxième étage dudit thermostat et lorsque, après une durée prédéterminée $t$, ce contact est resté fermé :

- puis ensuite, à partir du moment où cette chaudière deuxième énergie basse température ayant été mise en service simultanément à la chaudière électrique, puis arrêtée, aussi longtemps que le premier étage du thermostat d'ambiance à deux étages ne s'est pas réouvert, lorsque l'on enregistre à nouveau une fermeture du second étage le brûleur de la chaudière deuxième énergie basse température est mis en fonctionnement sans prendre en compte la durée prédéterminée t ;
- enfin, lorsque qu'après avoir été mise en service dans l'une ou l'autre des deux conditions ci-dessus, lorsque cette chaudière deuxième énergie basse température s'est arrêtée, lorsque la température dans le local à chauffer a provoqué l'ouverture du premier étage du thermostat d'ambiance, le brûleur de cette chaudière deuxième énergie basse température ne sera plus mis en service après une fermeture du deuxième étage du thermostat d'ambiance que lorsque la fermeture de ce deuxième contact aura été effective pendant une période d'une durée au moins égale à la valeur t prédéterminée.

En d'autres termes, le procédé selon l'invention consiste, pendant la tarification de l'électricité favorable, à enclencher la chaudière deuxième énergie basse température simultanément à la chaudière électrique :
- tout d'abord, que lorsqu'on est sûr que la deuxième chaudière électrique n'a pas pu maintenir la température du local à chauffer au droit du thermostat d'ambiance au-dessus d'une valeur minimum prédéterminée et que cette situation a été enregistrée pendant au moins une période d'une durée t également prédéterminée ;
- puis ensuite à partir du moment où la chaudière deuxième énergie basse température a été mise en fonctionnement, puis a été arrêtée, tant que le premier étage du thermostat d'ambiance du local ne s'est pas à nouveau ouvert, ce qui signifie alors tant que l'on n'a pas à nouveau atteint au niveau de ce thermostat la température maximum souhaitée dans le local à chauffer, et que par conséquent on fonctionne encore avec la chaudière électrique, après avoir enregistré l'ouverture du contact du second étage du thermostat, donc un arrêt de la chaudière deuxième énergie, on enregistre à nouveau une fermeture du contact de ce deuxième étage du thermostat, alors on met en service la chaudière deuxième énergie sans prendre en compte la constante de temps prédéterminée ;
- enfin, lorsque après avoir été mise en service la chaudière deuxième énergie basse température s'est arrêtée et que la température dans les locaux au droit du thermostat d'ambiance est telle qu'elle provoque l'ouverture du premier étage du thermostat et par là, l'arrêt de la chaudière électrique, à partir de cet instant, la chaudière deuxième énergie basse température ne peut plus être remise en service après une fermeture du contact du deuxième étage du thermostat d'ambiance aussi longtemps que ce contact n'a pas été fermé pendant une durée au moins égale à la durée t prédéterminée.

Ce procédé se caractérise également en ce que :
- lorsque l'on est sur tarification élevée de l'électricité, le premier étage du thermostat d'ambiance pilote le fonctionnement de la la chaudière deuxième énergie basse température. Lorsque ce contact se ferme, le brûleur de la la chaudière deuxième énergie se met en fonctionnement alors que lorsqu'il s'ouvre, ce brûleur s'arrête ;
- et en ce que en revanche, lorsqu'on est sur tarification favorable de l'électricité, le premier étage du thermostat pilote la mise en fonctionnement (ou l'arrêt) de la chaudière électrique, alors que le deuxième étage du même thermostat pilote la mise en fonctionnement (ou l'arrêt) du brûleur de la chaudière deuxième énergie.

Ainsi, pendant la période à tarification élevée de l'électricité, le premier étage du thermostat pilot le fonctionnement de la chaudière deuxième énergie alors que pendant les périodes à tarification favorable, le premier étage de ce thermostat pilote le fonctionnement de la chaudière électrique alors que le deuxième étage pilote le fonctionnement de la chaudière deuxième énergie basse température.

Pendant cette période à tarification favorable de l'électricité, pour que l'apport de calories fournies par la chaudière deuxième énergie ne provoque pas d'arrêt inutile de la chaudière électrique, la température maximum acceptée dans la chaudière deuxième énergie doit être inférieure à la température maximum acceptée dans la chaudière électrique. Cet écart de température peut être avantageusement de l'ordre de 10°. L'arrêt de la chaudière deuxième énergie basse température à cette température seuil, inférieure à la température d'arrêt de la chaudière électrique, est provoqué par un aquastat situé au départ de la chaudière électrique distinct de celui utilisé pour limiter la température dans la chaudière électrique.

Ces deux aquastats peuvent en constituer un seul, il s'agit alors d'un aquastat à deux étages.

Avantageusement, en pratique :
- la chaudière électrique est placée en aval de la chaudière deuxième énergie basse température ;
- la puissance de la chaudière électrique ne permet pas de couvrir la totalité des besoins thermiques pendant la période où l'électricité est à tarification favorable ;
- le thermostat d'ambiance à deux étages est placé dans les locaux à chauffer à l'endroit jugé le plus favorable, l'écart entre ces deux étages étant réglé au gré de l'utilisateur ;
- le passage d'une tarification de l'électricité à l'autre agit sur un relais dont la position est asservie à des impulsions envoyées dans le réseau de fourniture du courant électrique par le fournisseur même de courant ou par une horloge programmée.

L'invention concerne également une installation pour la mise en oeuvre de ce procédé de chauffage bi-énergie, du type comprenant :
- deux chaudières disposées en séries, et reliées au circuit de chauffage central. Elles ne sont pas maintenues en température lorsqu'elles ne fournissent pas de calorie au circuit de chauffage central. L'une électrique est équipée de deux aquastats ou d'un aquastat à deux étages. Le premier aquastat limite la température de l'eau dans la chaudière électrique. Le deuxième aquastat est réglé pour obtenir une ouverture de son contact pour une température de l'eau dans la chaudière électrique inférieure à celle qui provoque l'ouverture du précédent contact. Cet écart de température peut être avantageusement de l'ordre de 10°C. L'autre deuxième énergie basse température avec son brûleur, utilisant un combustible liquide ou gazeux. Cette chaudière est équipée d'un aquastat permettant de limiter la température de l'eau dans son enceinte lorsqu'elle fonctionne seule pendant la période à tarification élevée de l'électricité. Cet aquastat provoque l'arrêt du brûleur lorsqu'il détecte que cette température maximum est atteinte. Par contre pendant la période à tarification favorable de l'électricité c'est le deuxième aquastat situé au départ de la chaudière électrique qui provoque éventuellement l'arrêt de la chaudière deuxième énergie basse température lorsque la température détectée par cet aquastat est atteinte. Cet aquastat est calé à une température inférieure de l'ordre de 10°C par rapport à celui qui est chargé de limiter la température dans la chaudière électrique ;

- un thermostat d'ambiance à deux étages situé dans le local à chauffer ;

- une armoire de commande électrique comprenant :

. un organe de détection du niveau de tarification de l'électricité connecté à la chaudière électrique,

. un équipement électrique permettant de définir une constante de temps $t$ d'une durée prédéterminée,

. tous les équipement électriques peremttant de programmer les deux chaudières : électriques et deuxième énergie basse température conformément à l'invention, et d'alimenter électrique. ment en puissance les résistances de la chaudière électrique et les différents équipements du brûleur de la chaudière deuxième énergie basse température fonctionnant sur électricité,

cette installation se <u>caractérise</u> :

- d'une part, en ce que le premier étage du thermostat à deux étages pilote le fonctionnement de la chaudière deuxième énergie basse température lorsque l'on est sur tarification élevée de l'électricité et le fonctionnement de la chaudière électrique lorsque l'on est sur tarification électrique favorable ;

- en ce que le deuxième étage du même thermostat d'ambiance pilote la mise en fonctionnement du brûleur de la chaudière deuxième énergie lorsque l'on est sur tarification favorable de l'électricité ;

- et en ce que la température affichée au deuxième étage de ce thermostat est inférieure à celle affichée au premier étage ;

- ainsi pendant la période à tarification de l'électricité favorable, lorsque la température dans les locaux à chauffer au droit du thermostat d'ambiance descend à une valeur telle que le contact du deuxième étage se ferme, l'équipement définissant la constante de temps d'une durée prédéterminée $t$ est mis en fonctionnement.

Si à la fin de la durée prédéterminée $t$ le contact du deuxième étage du thermostat d'ambiance est toujours fermé, la chaudière deuxième énergie est mise en fonctionnement.

Si à la fin de la durée prédéterminée $t$ le contact du deuxième étage du thermostat d'ambiance est ouvert, la chaudière deuxième énergie n'est pas mise en fonctionnement. L'équipement définissant la constante de temps $t$ se remet en position initiale.

D'autre part, à partir du moment où la chaudière deuxième énergie a été mise en fonctionnement puis s'est arrêtée, tant que le contact du premier étage du thermostat d'ambiance reste fermé (ce qui revient à dire tant que la chaudière électrique reste en fonctionnement), lorsque le contact du deuxième étage du thermostat d'ambiance se referme à nouveau, le brûleur de la chaudière deuxième énergie est remis en service immédiatement sans que l'équipement définissant la constante de temps soit mis en service.

Toujours lorsque l'on est sur tarification favorable de l'électricité et que la chaudière deuxième énergie a été mise en fonctionnement puis s'est arrêtée, lorsque le contact du premier étage du thermostat d'ambiance s'ouvre à nouveau (ce qui provoque l'arrêt du fonctionnement de la chaudière électrique) le système conduisant à prendre en compte la constante de temps $t$ lorsque le contact du deuxième étage du thermostat d'ambiance se ferme, est remis en position initiale.

Ce qui revient à dire que après que la chaudière deuxième énergie ait été mise en fonctionnement puis se soit arrêtée, tant que la chaudière électrique reste en service, lorsque le contact du deuxième étage du thermostant d'ambiance se ferme (la température dans les locaux à chauffer vient de descendre en dessous de la température affichée au deuxième étage du thermostat d'ambiance), la chaudière deuxième énergie est mise en service, sans que l'équipement définissant la constante de temps $t$ entre en service.

Par contre après que le contact du deuxième étage du thermostat d'ambiance se soit à nouveau ouvert (arrêt de la chaudière deuxième énergie) et que le contact du premier étage de ce même thermostat d'ambiance se soit ouvert également (arrêt de la chaudière électri que) lorsque après cette situation, ces deux contacts se referment à nouveau successivement pour la première fois, l'équipement définissant la constante de temps $t$ est à nouveau remis en fonctionnement. A partir de cette situation, la chaudière deuxième énergie ne se met en service, après fermeture du contact du deuxième étage du thermostat d'ambiance, qu'après une période d'une durée $t$ prédéterminée.

Ainsi, l'utilisateur en choisissant la température seuil affichée au deuxième étage du thermostat d'ambiance installé dans les locaux à chauffer définit lui-même les conditions thermiques à partir desquelles il désire que la chaudière deuxième énergie basse température assure le complément thermique nécessaire de la chaudière électrique. Cet ajustement se fait facilement par ce thermostat qui lui est aisément accessible.

Ainsi, l'invention est parfaitement adaptée au chauffage bi-énergie faisant appel à une chaudière électrique fonctionnant dans des conditions telles que cette chaudière ne soit pas maintenue en température lorsque les éléments chauffants ne fournissant pas de calories à l'installation de chauffage. Elle peut cependant être également utilisée dans le cas d'installations de chauffage central équipées d'une chaudière électrique associée à une chaudière deuxième énergie maintenues toutes les deux en température lorsqu'elles ne fournissent pas de calories au circuit de chauffage central (installation de chauffage avec une vanne mélangeuse) lorsque l'utilisateur désire disposer d'une possibilité de réglage des conditions de fonctionnement de la simultanéïté, par le biais d'un thermostat d'ambiance à deux étages installé dans les locaux à chauffer auquel il aurait facilement accès.

La manière dont l'invention peut être réalisée et les avantages qui en découlent ressortiront mieux des exemples de réalisaiton qui suivent donnés à titre indicatif et non limitatif à l'appui des figures annexées.

La figure 1 est une représentation schématique d'une installation conforme à l'invention.

La figure 2 est une représentation schématique d'une autre installation perfectionnée pour la mise en oeuvre de l'invention. Semblable à la précédente, elle comporte en plus une régulation de la température de l'eau au départ du circuit de chauffage en fonction de la température à l'extérieure des locaux à chauffer.

La figure 3 est une représentation des différentes lois, adaptées à différentes installations de chauffage central, permettant de moduler la température de l'eau au départ de la chaufferie en fonction de la température extérieure au local à chauffer.

Les figures 4, 5 et 6 illustrent les conditions de ce fonctionnement simultané des deux chaudières en fonction des conditions de température dans le local à chauffer détectées au droit du thermostat d'ambiance à deux étages placé dans celui-ci.

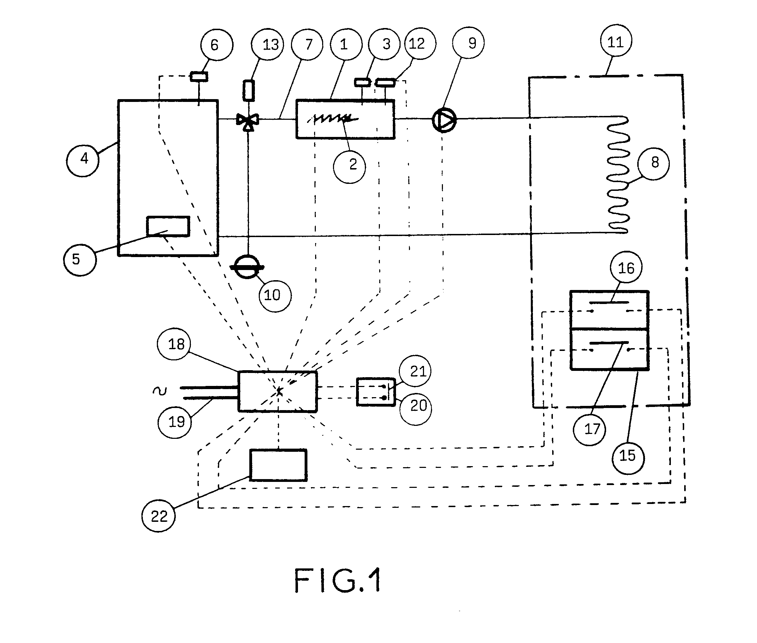

En se référant à la figure 1, l'installation comprend essentiellement :
- une chaudière électrique (1) à résistances (2) équipée d'un aquastat (3) permettant de limiter dans cette chaudière la température maximum de l'eau du circuit de chauffage central (7) lorsque la chaudière électrique (1) est en fonctionnement. Cette chaudière n'est pas maintenue en température lorsque ses résistances (2) ne fournissent pas de calories au circuit de chauffage ;
- une seconde chaudière (4) utilisant un combustible liquide ou gazeux, dite chaudière deuxième énergie basse température, équipée de son brûleur (5) et de son aquastat (6) permettant de limiter dans cette chaudière lorsqu'elle est utilisée seule, la température maximum de l'eau du circuit de chauffage central.

Cette chaudière deuxième énergie basse température ne nécessite pas son maintien en température lorsque son brûleur est à l'arrêt, en raison de ce que les matériaux utilisés pour sa réalisation résistent à la corrosion des condensats produits dans le foyer à chaque démarrage du brûleur.

La référence (7) désigne le circuit de chauffage central avec les radiateurs (8), le circulateur (9), le vase d'expansion (10). Le local à chauffer est repéré (11).

Les deux chaudières (1) et (4) sont placées en série. La chaudière électrique (1) est placée préférentiellement sur le circuit de chauffage central en aval de la chaudière deuxième énergie, mais elle peut être également placée en amont.

L'installation de la chaudière électrique en aval de la chaudière deuxième énergie permet lorsque les deux chaudières fonctionnent simultanément de faire fonctionner, la chaudière deuxième énergie dans de bonnes conditions de rendement en raison que la température de l'eau au retour de cette chaudière deuxième énergie basse température est à une température plus basse que celle obtenue avec une installation de la chaudière électrique en amont. La différence de température entre celle des gaz de combustion dans le foyer de (4) et celle de l'eau dans l'enceinte de (4) est plus importante lorsque la chaudière électrique est installée en aval par rapport à ce qu'elle serait si elle était installée en amont. Les conditions d'échange et le rendement thermique sont donc meilleurs.

Si dans cette réalisation, les deux chaudières : électrique et deuxième énergie basse température, sont distinctes pour clarifier au maximum les particularités de l'invention, il va de soi que dans la pratique, elles peuvent être incorporées dans un même ensemble sous une seule carrosserie, ce qui conduit à une chaudière bi-énergie compacte. Avantageusement, dans ce cas, le coffret de commande de régulation (18) est également intégré dans cet ensemble et placé sous cette carrosserie.

En plus de l'aquastat (3), un deuxième aquastat (12) est placé au départ de la chaudière électrique. Il est réglé à une température inférieure à la température d'arrêt de la chaudière électrique (1) définie par le réglage de l'aquastat (3) ainsi qu'à la température d'arrêt de la chaudière deuxième énergie (4) définie par le réglage de l'aquastat (6). Cet aquastat (12) peut être placé dans la chaudière électrique (1) à côté de l'aquastat (3). Ce peut être également un aquastat à deux étages.

Pendant les périodes à tarification de l'électricité favorable, cet aquastat (12) provoque l'arrêt de la chaudière deuxième énergie (4) après qu'elle soit venue en appoint de la chaudière électrique (1) pour assurer le complément thermique qu'elle n'était pas à même de fournir.

Cet aquastat (12) permet par le choix judicieux de son réglage d'empêcher, en provoquant l'arrêt de la chaudière deuxième énergie à une température inférieure à celle de la coupure de la chaudière électrique, que l'appoint thermique fourni par cette chaudière deuxième énergie ne provoque un arrêt inutile de la chaudière électrique (1).

Pendant la période à tarification élevée de l'électricité, l'aquastat (6) provoque l'arrêt du brûleur (5) de la chaudière (4) lorsque la température de l'eau atteint au départ de celle-ci la valeur affichée à l'aquastat (6).

Du fait des particularités des nouvelles tarifications de l'électricité, cette chaudière deuxième énergie (4) est utilisée seule pendant la période des grands froids. De façon à assurer ce chauffage dans les meilleures conditions, l'aquastat (6) de la chaudière deuxième énergie peut être réglé à une température supérieure à celle affichée à l'aquastat (3) de la chaudière électrique.

Ces aquastats (3, 6, 12) limiteurs de température se déclenchent aux températures affichées, il s'enclenchent à une température distincte de celles-ci, généralement inférieure de l'ordre de 5°C.

Une vanne directionnelle motorisée (13) à trois voies permet de ne pas faire passer l'eau du circuit de chauffage (7) dans la chau dière deuxième énergie basse température (4) lorsqu'elle n'est pas en service, afin d'éviter, pendant les périodes à tarification favorable de l'électricité, les déperditions inutiles par les parois de cette chaudière (4), ainsi que par la cheminée à laquelle celle-ci est raccordée. Cette vanne directionnelle (13) est également pilotée par le biais du coffret (18).

Un thermostat d'ambiance (15) à deux étages (16) et (17) est placé dans l'enceinte à chauffer (11) à l'endroit le plus judicieux.

Pendant les périodes à tarification défavorable de l'électricité, le premier étage (16) du thermostat d'ambiance (15) pilote le fonctionnement de la chaudière deuxième énergie basse température.

Pendant la période à tarification favorable de l'électricité le premier étage (16) pilote le fonctionnement de la chaudière électrique alors que le deuxième étage (17) pilote le fonctionnement de la chaudière deuxième énergie basse température.

Dans ce thermostat (15) l'écart de température entre la température de fermeture d'un contact et celle provoquant son ouverture est de l'ordre du dixième de degrés.

Par contre, l'écart retenu par l'utilisateur entre les deux étages est fonction du confort qu'il souhaite obtenir. Cet écart est en général de 1 à 1,5°C.

Par construction, ces thermostats permettent des écarts entre les deux étages pouvant aller jusqu'à 4°C.

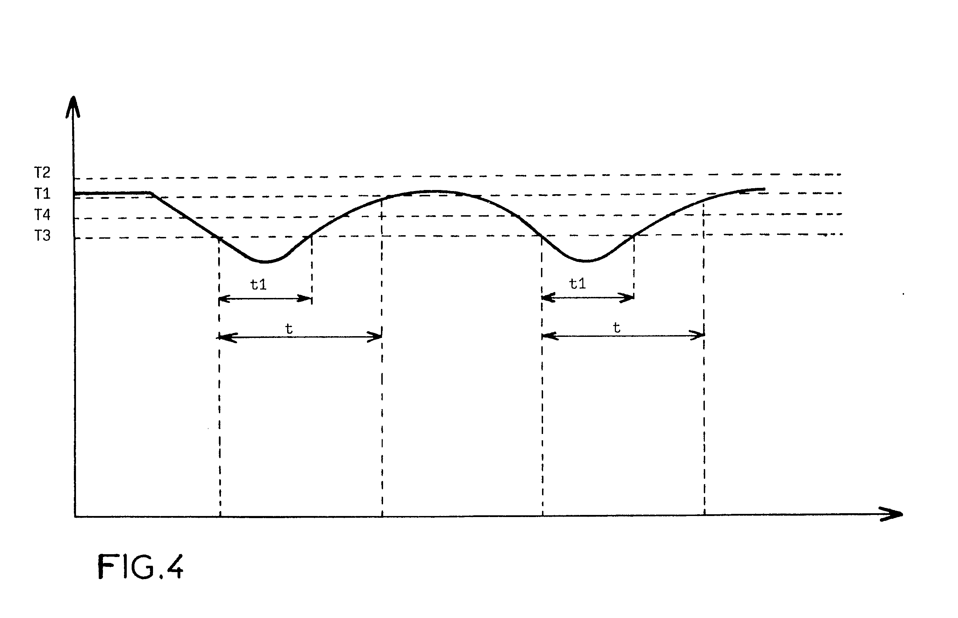

Dans les figures 4 à 6 :

- T1 désigne la température du local à chauffer (11) au droit du thermostat d'ambiance (15) qui provoque la fermeture du contact (16),

- T2 la température au même endroit qui provoque l'ouverture de ce contact (16),

- T3 la température au même endroit qui provoque la fermeture du contact (17),

- T4 la température au même endroit qui provoque l'ouverture de ce contact (17).

Dans le coffret de régulation (18), incorporé ou non à la chaudière électrique (1) mais que l'on a représenté séparé pour la commodité des besoins, se trouvent tous les relais, contacteurs, temporisateur (22), interrupteur général et autres équipements connus pour assurer le bon fonctionnement de l'installation conformément à l'invention.

Ce coffret (18) est relié par le circuit de puissance (19) au tableau du fournisseur de courant électrique sur lequel se trouve le compteur enregistreur de la quantité d'électricité consommée.

Ce coffret (18) est également relié par un circuit d'asservissement à un relais (20) situé sur ce tableau général. Le contact (21) de ce relais (20) est fermé pendant les périodes à tarification de l'électricité favorable et ouvert pendant les périodes à tarification élevée de l'électricité, mais ce pourrait être l'inverse.

Le changement de fonction du contact (16) du premier étage du thermostat (15) qui pilote le brûleur (5) de (4) pendant la période à tarification de l'électricité élevée et les résistances (2) de (1) pendant la période à tarification de l'électricité favorable, est asservie par le biais du coffret (18) à l'ouverture ou la fermeture du contact (21) du relais (20) situé sur le tableau général.

Comme déjà dit, l'installation ne comporte pas de vanne mélangeuse, les chaudières (1) et (4) n'étant pas maintenues en température lorsqu'elles ne sont pas en fonctionnement.

Ainsi l'invention permet, pendant la période à tarification favorable de l'électricité, à l'utilisateur de régler lui-même par le biais du thermostat à deux étages, les conditions d'ambiance dans le local à chauffer et se faisant les conditions d'appoint thermique de la chaudière deuxième énergie basse température.

Ce choix étant fait, l'invention permet à la fois :
- d'éliminer les mises en service de courte durée du brûleur (5) de la chaudière deuxième energie basse température (4) par le biais de la temporisation (22) du coffret (18) ;
- de permettre la mise en route du brûleur (5) sans retard lorsque le besoin de complément thermique que doit fournir la chaudière deuxième énergie basse température (4) est détecté comme certain. Ces appoints de complément thermique par la chaudière deuxième énergie basse température (4) se sont sans provoquer d'arrêt inutile de la chaudière électrique (1) ce qui permet pendant la période à tarification favorable de l'électricité d'assurer le maximum du chauffage à partir de cette énergie.

Comme il a été indiqué précédemment, pendant la période à tarification favorable de l'électricité, le premier étage (16) du thermostat d'ambiance (15) pilote la mise en marche ou l'arrêt des éléments chauffants (2) de la chaudière électrique (1) alors que le deuxième étage (17) pilote la mise en service ou l'arrêt du brûleur (5) de la chaudière deuxième énergie (4).

L'écart de température, dans le sens d'une diminution, entre T1 et T3 (ou T2 et T4) est choisi par l'utilisateur, par exemple de l'ordre de 1 à 2°C.

Pendant cette période à tarification de l'électricité favorable, c'est par le biais du thermostat d'ambiance (15) à deux étages (16) et (17) que la chaudière électrique (1) ou les deux chaudières (1) et (4) sont pilotées pour fournir les calories permettant d'assurer le chauffage du local (11).

Les aquastats limiteurs de température (3) (6) et (12) ne servent qu'à limiter la température de l'eau à l'intérieur des chaudières (1) et (4). Ils n'interviennent pas dans le processus de régulation de la température du local à chauffer dans la mesure ou les valeurs qui sont retenues pour leur réglage conduisent à obtenir une température de l'eau au départ des chaudières suffisante pour apporter au local à chauffer la quantité de calories nécessaires au chauffage de ces locaux. Ces réglages sont effectués par l'utilisateur.

Comme il est précisé ultérieurement, l'installation de chauffage peut également être équipée d'une régulation modulant la température au départ des chaudières en fonction de la température à l'intérieur du local à chauffer (11).

Comme il a été exposé précédemment, la fonction de l'aquastat (12) est d'empêcher que la mise en fonctionnement de la chaudière (4) ne provoque un arrêt inutile de la chaudière électrique (1), alors que celle-ci doit assurer, pendant la période à tarification favorable de l'électricité, le maximum de chauffage.

Pendant la période à tarification élevée de l'électricité lorsque la température dans l'enceinte (11) devient égale ou inférieure à T1 la fermeture du contact (16) du thermostat d'ambiance à deux étages (15) provoque la mise en fonctionnement du brûleur (5) de la chaudière deuxième énergie basse température (4). L'ouverture de ce contact (16) se produit lorsque la température T2 est atteinte. Elle provoque l'arrêt du brûleur (5) de la chaudière (4).

Par contre pendant la période à tarification favorable de l'électricité lorsque la température dans l'enceinte (11) devient égale ou inférieure à T1, le contact (16) se ferme. Cette fermeture provoque la mise en fonctionnement de la chaudière électrique (1). Lorque la température dans (11) devient égale ou supérieure à T2,le contact (16) s'ouvre. La chaudière électrique (1) s'arrête. Lorsque la température dans (11) devient égale ou inférieure à T3, le contact (17) se ferme. Cette fermeture provoque la mise en fonctionnement de la temporisation (22) du coffret (18).

Si au bout du temps (t), dont la valeur a été choisie par l'utilisateur, l'installateur ou le fabricant de chaudières, la température dans le local à chauffer (11) est remontée au dessus de T4, le contact (17) s'est ouvert, le brûleur de la chaudière (5) n'est pas mis en service (figure 4).

Au moment (t1) ou la température T4 dans l'enceinte (11) provoque l'ouverture du contact (17), (t1) ayant été inférieur à (t) la temporisation (22) se remet en position initiale. Elle est alors à même de se remettre en fonctionnement à la première nouvelle fermeture de (17) lorsque la température T3 sera à nouveau atteinte (figure 4).

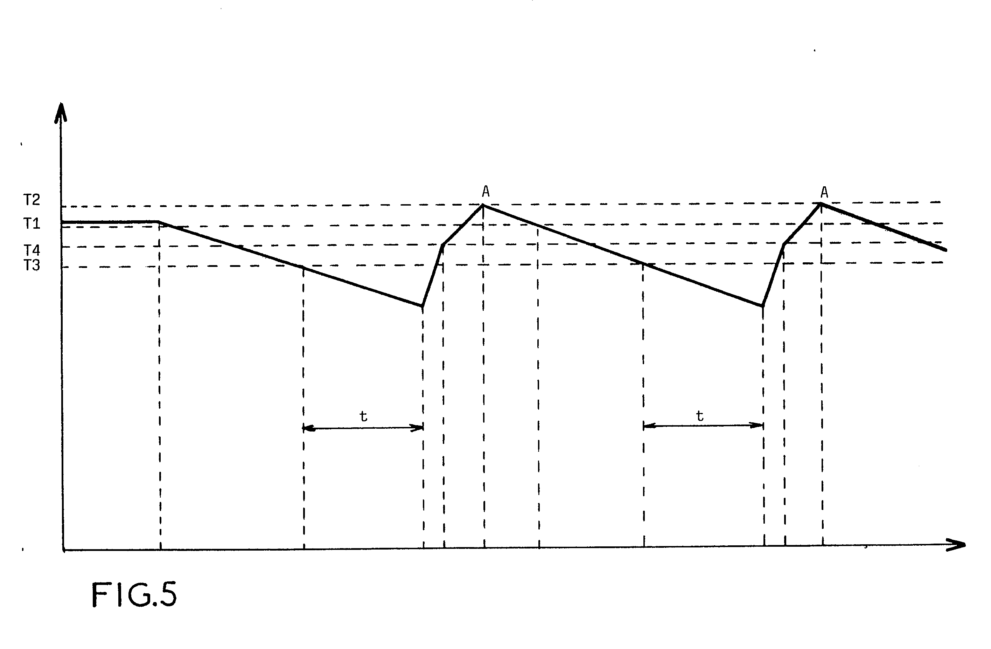

En revanche si à la fin de la période (t) (figure 5) la température dans l'enceinte (11) est inférieure ou égale àT3, le contact (17) du deuxième étage du thermostat d'ambiance (15) est toujours fermé, le brûleur (5) de la chaudière deuxième énergie basse température (4) est mis en service.

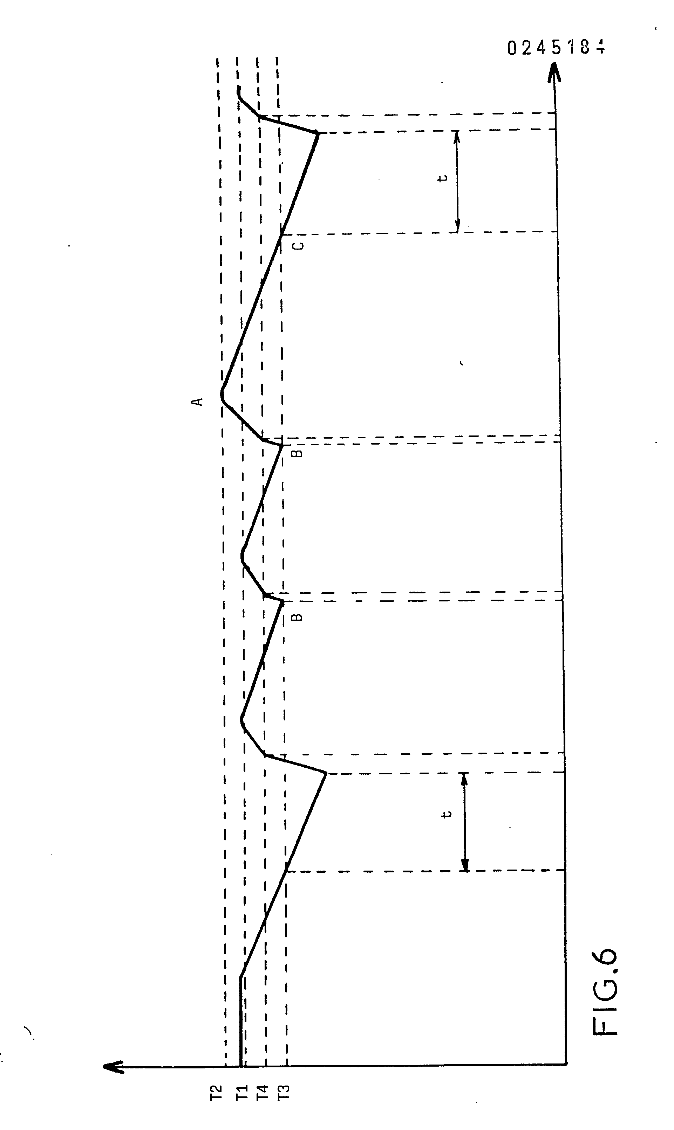

A partir de ce moment lorsque la température dans (11) atteint à nouveau la valeur (T4) le brûleur (5) de (4) est arrêté. De ce fait la temporisation (22) se remet en position initiale lorsque la température dans le local à chauffer (11) atteint la température T2 provoquant l'ouverture du contact (16) du premier étage du thermostat à deux étages (15) et par conséquent l'arrêt de la chaudière électrique (1) (figures 5 et 6 - repères A).

Par contre, si dans (11), après que la température T4 ait été atteinte et que par conséquent (17) se soit ouvert, tant que T2 n'est pas atteint et que par conséquent (16) ne se soit ouvert, lorsque la température dans (11) devient égale à T3 (figure 6) le brûleur (5) de (4) est mis en service dès que (17) se ferme. (figure 6 - repères B).

Ce n'est qu'après que T2 ait été atteint dans (11) et que (16) se soit ouvert que la temporisation est remise en position initiale et reprise en compte lorsque la température redescend à nouveau à la valeur T3 provoquant la fermeture de (17) (figure 6 - repère C).

Il est ainsi possible avec des chaudières électriques (1) et deuxième énergie basse température (4) non maintenues toutes les deux en température lorsque leur brûleur (5) ou résistance électrique (2) ne sont pas en fonctionnement, de disposer d'un fonctionnement simultané des deux chaudières avec effacement optimal des mises en service de courte durée de la chaudière deuxième énergie à partir d'un pilotage des deux chaudières par un thermostat d'ambiance à deux étages situés dans le local à chauffer (11) facilement réglable par l'utilisateur.

Il en est de même si l'installation comporte une modulation de la température de l'eau envoyée dans le circuit de chauffage central à partir d'une régulation en fonction de la température extérieure.

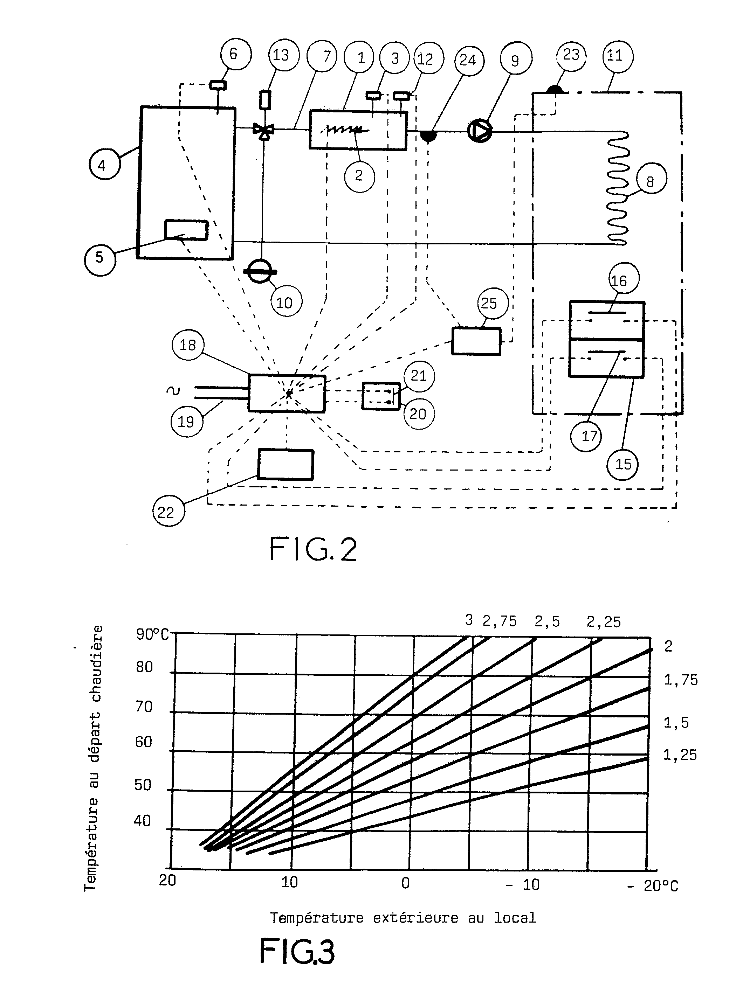

L'installation montrée à la figure 2 est identique dans son schéma de base à la précédente, mais elle comporte en plus, une première sonde (23) de saisie de la température à l'extérieur du local (11) et une deuxième sonde (24) d'enregistrement de la température de l'eau du circuit de chauffage central (7) au départ de la chaudière électrique (1), lorsqu'elle est installée en aval de la chaudière deuxième énergie basse température (4) comme il l'est retenu préférentiellement.

Cette sonde (24) est placée au départ de la chaudière deuxième énergie (4), si la chaudière électrique (1) est placée en amont de la chaudière (4). Ces deux sondes sont reliées à un boitier de régulation (25), lui-même relié au coffret(18).

Cette régulation détermine la température de l'eau à envoyer dans le circuit de chauffage central (7) en fonction de la température extérieure aux locaux détectés par la sonde (23).

Cette température se détermine en fonction de différentes lois possibles illustrées à la figure 3 dans laquelle on a représenté en ordonnée la température de l'eau au départ de la chaudière la plus en aval et en abcisse la température extérieure au local (11). La loi de fonctionnement indiquée par un nombre est choisie par l'utilisateur en fonction de la nature de l'habitation à chauffer (11) et de la surface émissive des radiateurs (8).

Lorsque la température de l'eau de chauffage central détectée par la sonde (24) correspond à la valeur désirée, la régulation (25) provoque l'arrêt de la chaudière (1) et/ou (4) qui se trouve être en fonctionnement.

Comme dans le cas de l'installation correspondant à la figure 1 le choix de la chaudière à mettre en fonctionnement lorsque le premier étage (16) du thermostat d'ambiance (15) se ferme est fonction de la tarification de l'électricité et par conséquent de l'ouverture ou de la fermeture du contact (21) du relais (20).

Par contre dans une installation correspondant à la figure 2 il faut pour que la chaudière soit mise en service que en plus de la fermeture du contact (16) de (15) la température au départ détectée par la sonde (24) soit inférieure à la valeur définie par la régulation (25) en fonction de la température détectée par (23) à l'extérieur ou l'installateur (figure 3).

La régulation (25) en modulant la température de l'eau envoyée dans le circuit de chauffage (7) améliore le confort.

Pendant la période à tarification favorable de l'électricité, la fermeture du contact (21) provoque par le biais du coffret (18) la mise en service de (1) aussi longtemps que le contact (16) est fermé et éventuellement de (4) aussi longtemps que (17) est fermé. L'action de la sonde (24) par le biais de (23) et de (25) n'intervient que lorsque (16) et/ou (17) sont fermés.

Dans une telle installation (figure 2), sans vanne de mélange, il est ainsi possible d'avoir comme dans le cas correspondant à la figure 1 un mode de chauffage bi-énergie tel que pendant la période à tarification favorable de l'électricité la chaudière électrique (1) assure le chauffage avec un complément apporté si nécessaire par la chaudière deuxième énergie (4) tout en modulant la température de l'eau au départ de (7) en fonction de la température de l'extérieur de 11. Le complément thermique apporté par (4) s'effectuant avec d'une part un effacement optimal des mises en fonctionnement de courte durée de cette chaudière deuxième énergie (4) et d'autre part sans provoquer d'arrêts inutiles de la chaudière électrique (1).

Ainsi, l'action du thermostat à deux étages (15) associé à celle du relais (21), détermine le choix de la ou des chaudières (1) et/ou (4) à mettre en service par le biais du coffret (18), alors que l'action des sondes (23, 24) et de leur régulateur (25) module la température de l'eau au départ de la chaufferie par la mise en marche ou l'arrêt des chaudières sélectionnées par (21, 16 ou 17). Toutefois cette action de (23, 24 et 25) ne provoque la mise en fonctionnement des chaudières (1) et/ou (4) que si les contacts (16) ou (17) sont fermés.

L'invention présente de nombreux avantages par rapport aux solutions de chauffage bi-énergie connues jusqu'à ce jour.On peut citer :
- la possibilité d'utiliser pour assurer un chauffage bi-énergie une chaudière électrique et une chaudière deuxième énergie non maintenues en température lorsqu'elles ne fournissent pas de calories au circuit de chauffage ;
- de réaliser des installations de chauffage central sans vanne mélangeuse ;
- de donner la possibilité à l'utilisateur de régler lui-même aisément les conditions de mise en fonctionnement simultané des deux chaudières : électrique et deuxième énergie basse température, par le biais d'un thermostat d'ambiance à deux étages situé dans les locaux à chauffer et auquel il a très facilement accès ;
- la suppression des effets négatifs provoqués par des mises en route intempestives ou de courte durée de la chaudière deuxième énergie basse température lorsqu'elle fonctionne en complément de la chaudière électrique tels que :
. l'absence de condensation dans les cheminées et de détérioration de ces cheminées,
. la consommation inutile de la deuxième énergie pendant les périodes à tarification favorable de l'électricité,
ce que l'on ne savait faire jusqu'alors avec un tel degré d'efficacité dans la technique de chauffage bi-énergie.

## Revendications

1/ Procédé de chauffage central bi-énergie au moyen d'une installation comprenant deux chaudières disposées en série et reliées au circuit de chauffage central (7, 8),
. une première chaudière (4) basse température à combustible liquide ou gazeux équipée d'un brûleur (5), dite chaudière deuxième énergie basse température, dont la puissance permet de couvrir la totalité des besoins thermiques pendant les jours les plus froids, équipée d'un aquastat (6) limiteur de la température de l'eau dans son enceinte lorsqu'elle fonctionne seule pendant la période à tarification élevée de l'électricité ;
. une deuxième chaudière du type électrique (1) non maintenue en température lorsque ses résistances électriques (2) ne fournissent pas de calorie au circuit de chauffage, dont la puissance ne permet de couvrir qu'une partie des besoins thermiques pendant la période à tarification favorable de l'électricité, équipée de deux aquastats (3), (12) dont l'un (3) permet de limiter la température de l'eau dans son enceinte lorsqu'elle est en fonctionnement et l'autre (12) dont la température de coupure est inférieure à celle de (3), ce deuxième aquastat (12) provoque éventuellement l'arrêt de la chaudière deuxième énergie basse température (4) lorsque, pendant les périodes à tarification favorable de l'électricité, cette chaudière deuxième énergie basse température fonctionne simultanément à la chaudière électrique (1), de façon à apporter le complément thermique que la chaudière électrique (1) n'est pas à même de fournir en raison de la limitation de sa puissance ;
. un thermostat d'ambiance (15) à deux étages (16, 17) disposé dans le local à chauffer, dont l'écart de température entre l'ouverture (ou la fermeture) des deux étages (16,17) du thermostat (15) est réglé au voisinage de quelques degrés (1 à 2°C) ;
. une armoire de commande électrique (18) pour piloter la mise en service et/ou l'arrêt desdites chaudières (1), (4), reliée par le biais d'un relais (20) au système de modification de la tarification de l'électricité ;
caractérisé en ce que, pendant la période à tarification de l'électricité favorable, on enclenche la chaudière deuxième énergie basse température (4), simultanément à la chaudière électrique (1) :
- tout d'abord, lorsque la température T dans le local (11) à chauffer, détectée par le thermostat (15) devient au plus égale à la température T3 de fermeture du second étage (17) dudit thermostat (15) et lorsque, après une durée prédéterminée t, le contact de ce deuxième étage (17) est resté fermé ;

- puis ensuite, à partir du moment où cette chaudière deuxième énergie basse température (4) ayant été ainsi mise en service puis arrêtée et aussi longtemps que le premier étage (16) du thermostat (15) ne s'est pas à nouveau ouvert, lorsqu'on enregistre à nouveau une fermeture du contact du second étage (17) de ce thermostat (15), la chaudière deuxième énergie basse température est mise en service et ce, sans prendre en compte la durée prédéterminée t ;

- enfin, lorsque, après avoir été ainsi mise en service, cette chaudière deuxième énergie (4) s'est arrêtée, lorsque la température T dans le local (11) à chauffer a provoqué l'ouverture du premier étage (16) du thermostat (15), à partir de cet instant, cette chaudière deuxième énergie basse température (4) n'est pas remise en service aussi longtemps que le contact du deuxième étage (17) du thermostat (15) n'a pas été fermé pendant une durée au moins égale à la dite durée t prédéterminée.

2/ Procédé selon la revendication 1, caractérisé en ce que :

- lorsque la température T dans le local à chauffer (11) descend à une température T3 correspondant à la température de fermeture du deuxième étage (17) du thermostat (15), le moyen définissant la constante de temps d'une durée prédéterminée t est mis en fonctionnement ;

- puis, à la fin de cette durée prédéterminée t, si le contact du deuxième étage (17) du thermostat (15) est toujours fermé, la chaudière deuxième énergie basse température (4) est mise en fonctionnement ;

- puis, à la fin de cette durée prédéterminée t, si le contact du deuxième étage (17) du thermostat (15) est ouvert, la chaudière deuxième énergie basse température (4) n'est pas mise en fonctionnement, l'équipement définissant la constante de temps t se remet alors en position initiale ;

- enfin, à partir du moment où la chaudière deuxième énergie basse température (4) a été mise en fonctionnement puis s'est arrêtée, tant que le contact du premier étage (16) du thermostat (15) reste fermé, lorsque le contact du deuxième étage (17) du thermostat (15) se ferme à nouveau, le brûleur (5) de la chaudière deuxième énergie (4) est mis en service sans que l'équipement définissant la constante de t soit mis en service.

3/ Procédé selon l'une des revendications 1 et 2, caractérisé :

- en ce que le premier étage (16) du thermostat (15) à deux étages pilote le fonctionnement de la chaudière deuxième énergie basse température (4) lorsque l'on est sur tarification élevée de l'électricité et le fonctionnement de la chaudière électrique (1) lorsqu'on est sur tarification électrique favorable ;

- en ce que le deuxième étage (17) du même thermostat (15) pilote la mise en fonctionnement du brûleur (5) de la chaudière deuxième énergie (4) lorsqu'on est sur tarification favorable de l'électricité ;

- et enfin en ce que la température affichée au deuxième étage (17) de ce thermostat (15) est inférieure à celle affichée au premier étage (16).

4/ Procédé selon l'une des revendications 1 à 3, caractérisé en ce que l'installation comprend également deux sondes de prise en température, la première (23) à l'extérieur du local (11), la seconde (24) sur la tuyauterie de l'installation de chauffage central (7) au départ de la chaudière installée la plus en aval, reliées à un boitier de régulation (25) de la température de l'eau du circuit de chauffage au départ de la chaudière la plus en aval, en fonction de la température extérieure suivant une loi de modulation sélectionnée par l'utilisateur.

5/ Procédé selon la revendication 4, caractérisé en ce que le boitier de régulation (25) est relié à l'armoire de commande (18) dont le fonctionnement est asservi aux informations venant de (25).

6/ Installation pour la mise en oeuvre du procédé selon l'une des revendications 1 à 5.

FIG.1

0245184

FIG.2

FIG.3

Température au départ chaudière

Température extérieure au local

FIG.4

FIG.5

FIG.6

# RAPPORT DE RECHERCHE EUROPEENNE

Office européen des brevets

Numéro de la demande

EP 87 42 0115

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | EP-A-0 108 699 (SOC. FINANCIERE ET COMMERCIALE DU CHABLAIS) ----- | | F 24 D 19/10 |

| | DOMAINES TECHNIQUES RECHERCHES (Int. Cl.4) |
|---|---|
| | F 24 D |

Le présent rapport de recherche a été établi pour toutes les revendications

| Lieu de la recherche | Date d'achèvement de la recherche | Examinateur |
|---|---|---|
| LA HAYE | 10-08-1987 | VAN GESTEL H.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82